# EUROPEAN PATENT SPECIFICATION

(11) **EP 2 710 811 B1**
(45) Date of publication and mention of the grant of the patent: **18.10.2017**
(21) Application number: 11865473.0
(22) Date of filing: 17.05.2011
(51) Int. Cl.: H04W 24/04, H04B 10/2575, H04W 88/08, H04B 10/032, H04J 14/02

(54) **PROTECTION FOR FIBRE OPTIC ACCESS NETWORKS**
SCHUTZ FÜR FASEROPTISCHE ZUGANGSNETZE
PROTECTION POUR RÉSEAUX D'ACCÈS À FIBRES OPTIQUES

(43) Date of publication of application: 26.03.2014
(73) Proprietor: Telefonaktiebolaget LM Ericsson (publ), 164 83 Stockholm (SE)
(72) Inventor: IN DE BETOU, Einar, S-162 63 Vällingby (SE); DAHLFORT, Stefan, S-164 80 Stockholm (SE); HOOD, David, Palo Alto, California 94301 (US); ÖHLÉN, Peter, S-117 27 Stockholm (SE)
(74) Representative: Ericsson
(86) International application number: PCT/SE2011/050621
(87) International publication number: WO 2012/158080

(56) References cited:
- WO-A1-2009/116904
- WO-A1-2009/116904
- JP-A- 2006 020 224
- US-A1- 2007 206 947
- US-A1- 2010 316 380
- US-A1- 2010 316 380
- US-B1- 6 351 582

## Description

### Technical field

Embodiments herein relate generally to protection for fibre optic access networks, and in particular to protection of connection between an Optical Network Unit and an Optical Line Terminal in a fibre optic access network.

### Background

Fibre optic access networks connect users to a switching equipment of a network operator for processing and further transport of data signals toward a core part of the network.

The access network can be either point-to-point (e.g. Ethernet P2P) or point-to-multipoint fibre topology (e.g. Ethernet Passive Optical Network, EPON, Gigabit Passive Optical Network, GPON, or Wavelength Division Multiplexing Passive Optical Network, WDM-PON). The communicating end terminals are referred to as Optical Network Unit, ONU, at the customer site and Optical Line Terminal, OLT, in a Central Office of the network operator.

To provide services over the access network, even in case of a failure, a resilience mechanism is often implemented. This is typically done by protecting a part of the network with a backup network. Resilience in the fibre optic access network is becoming increasingly important for at least two reasons. A converged fibre optic access network needs to support high availability services such as Voice over IP, Business service, Mobile Backhaul traffic, etc. Network operators seek to achieve node consolidation, where the network switching equipment is to a higher degree localized in centralized nodes, to save on operational expenditures. This means that more and more customers are served over the access network infrastructure that connects the end user to the switching equipment. This also means that potentially more and more end customers could be affected by a single failure.

A way of protecting the central parts of the access network is referred to as "dual homing". In this scenario, a main fibre path between end users and the central office splits into a protection fibre path that leads to a central office in an adjacent service area.

When communication cannot be executed on the main fibre path, the communication is instead executed on the protection fibre path. However, the protection fibre path may not be capable of supporting the same transmission rate as the main fibre path, thereby requiring active equipment such as amplifiers along the fibre link in order to amplify and restore the signal as it travels along the fibre link such that it may be received by a receiving end terminal. However, such active equipment is relatively costly to operate and maintain. Further, the main fibre path and the protection fibre path may not be of the same length, thereby imposing different requirements on the main path and the protection path.

In the case the protection fibre path is much longer than the main fibre path, excessive requirements may be imposed on the optical transceivers. Up to 100 km transmission distances may need to be supported. Such distances are difficult to achieve with low cost optics. Moreover, the link budget of access networks may be impacted by additional losses such as connectors and impairments such as bends etc. Thus, a fibre link may just be slightly too long or associated with losses slightly too high for the optical transceivers to handle. This may result in a hard stop where the optical transceivers simply do not get the link up for communication between the two end terminals, the ONU and the OLT. WO 2009/116904deals with protection switching in which an ONU does not return to an initial state during a fast protection switch process.

US2007/0206947 discloses generally the negotiation of a transmission rate in a fibre.

### Summary

It is an object of the exemplifying embodiments to address at least some of the problems outlined above. In particular, it is an object of the exemplifying embodiments to provide an Optical Network Unit, ONU, an Optical Line Terminal, OLT, a method an ONU and a method in an OLT for enabling the ONU to communicate over a fibre optic access network comprising the ONU and the OLT. These objects and others may be obtained by providing an ONU and an OLT and a method in an ONU and an OLT according to the independent claims attached below.

According to an aspect a method in an Optical Network Unit, ONU, in a fibre optic access network, the fibre optic access network comprising at least one Optical Line Terminal, OLT, and two fibre paths through the fibre optic network, a main path and a back-up path, connecting the ONU with the OLT for enabling the ONU to communicate over the fibre optic access network is provided. The method comprises detecting a fault in the main path between the ONU and the OLT, during ongoing communication. The method also comprises performing a transmission rate negotiation with the OLT over the back-up path. When a transmission rate is agreed upon between the ONU and the OLT during the transmission rate negotiation with regard to communication over the back-up path, the method comprises executing communication with the OLT using the agreed transmission rate over the back-up path.

According to an aspect, a method in an Optical Line Terminal, OLT, in a fibre optic access network, the fibre optic access network comprising at least two fibre paths between the OLT and an Optical Network Unit, ONU, a main fibre path and a back-up fibre path, for enabling the ONU to communicate over the fibre optic access network is provided. The method comprises detecting a fault in the main fibre path between the OLT and the ONU, during ongoing communication. The method also comprises performing a transmission rate negotiation with the ONU over the back-up path upon detecting the fault in the main fibre path. When a transmission rate is agreed upon between the OLT and the ONU, during the transmission rate negotiation with regard to communication over the back-up fibre path, the method comprises executing communication with the ONU using the agreed transmission rate over the back-up fibre path.

According to an aspect, an Optical Network Unit, ONU, in a fibre optic access network, the fibre optic access network comprising at least one Optical Line Terminal, OLT, and two fibre paths through the fibre optic network, a main path and a back-up path, connecting the ONU with the OLT, the ONU being adapted to enable the ONU to communicate over the fibre optic access network is provided. The ONU comprises a processing unit adapted to detect a fault in the main path between the ONU and the OLT during ongoing communication. The processing unit is also adapted to perform a transmission rate negotiation with the OLT over the back-up path. When a transmission rate is agreed upon between the ONU and the OLT during the transmission rate negotiation with regard to communication over the back-up path, the processing unit is adapted to execute communication with the OLT using the agreed transmission rate over the back-up path.

According to an aspect, an Optical Line Terminal, OLT, in a fibre optic access network, the fibre optic access network comprising at least two fibre paths between the OLT and an Optical Network Unit, ONU, a main fibre path and a back-up fibre path, the OLT being adapted to enable the ONU to communicate over the fibre optic access network is provided. The OLT comprises a processing unit adapted to detect a fault in the main fibre path between the OLT and the ONU, during ongoing communication. The processing unit is also adapted to perform a transmission rate negotiation with the ONU over the back-up path upon detecting the fault in the main fibre path. When a transmission rate is agreed upon between the OLT and the ONU, during the transmission rate negotiation with regard to communication over the back-up fibre path, the processing unit is adapted to execute communication with the ONU using the agreed transmission rate over the back-up fibre path.

### Brief description of drawings

Embodiments will now be described in more detail in relation to the accompanying drawings, in which:
Figure 1a is a flowchart of an exemplifying embodiment of a method in ONU for enabling the ONU to communicate over the optic fibre access network.
Figure 1b is a flowchart of an exemplifying embodiment of a method in an ONU for enabling the ONU to communicate over the optic fibre access network
Figure 2a is a flowchart of an exemplifying embodiment of a method in an OLT enabling an ONU to communicate over the fibre optic access network.
Figure 2b is a flowchart of an exemplifying embodiment of a method in an OLT for enabling the ONU to communicate over the optic fibre access network.
Figure 2c is a flowchart of an exemplifying embodiment of a method in an OLT, wherein the OLT is a back-up OLT.
Figure 2d is a flowchart of an exemplifying embodiment of a method in an OLT, wherein the OLT is a back-up OLT.
Figure 3a is a block diagram schematically illustrating an exemplifying embodiment of an ONU and an OLT connected by two fibre link paths.
Figure 3b is a block diagram schematically illustrating an exemplifying embodiment of an ONU, a main OLT connected to the ONU via a main fibre link path, and a back-up OLT connected to the ONU via a back-up fibre link path.
Figure 3c schematically illustrates several ONUs connected to an OLT via two fibre path links, a main fibre link and a back-up fibre link.
Figure 3d schematically illustrates several ONUs connected to a main OLT via a main fibre link and connected to a back-up OLT via a back-up fibre link.
Figure 4 is a block diagram schematically illustrating an exemplifying embodiment of a part of a passive optical network.

### Detailed description

Briefly described, exemplifying embodiments of a method in an Optical Network Unit, ONU, and a method in an Optical Line Terminal, OLT, as well as an ONU and an OLT, are provided in a fibre optic access network, the fibre optic access network comprising at least one OLT and two fibre paths or links through the fibre optic access network, a main fibre path and a back-up fibre path, connecting the ONU with the at least one OLT for enabling the ONU to communicate over the fibre optic access network. The enabling of the ONU to communicate, over the fibre optic access network, with the at least one OLT is ensured by, in case a fault in the main fibre path or link between the ONU and the OLT is detected, performing a transmission rate negotiation with the OLT over the back-up path.

It shall be noted that the expression "fibre path" or simply "path" will be used herein to refer to a fibre link or a fibre path link.

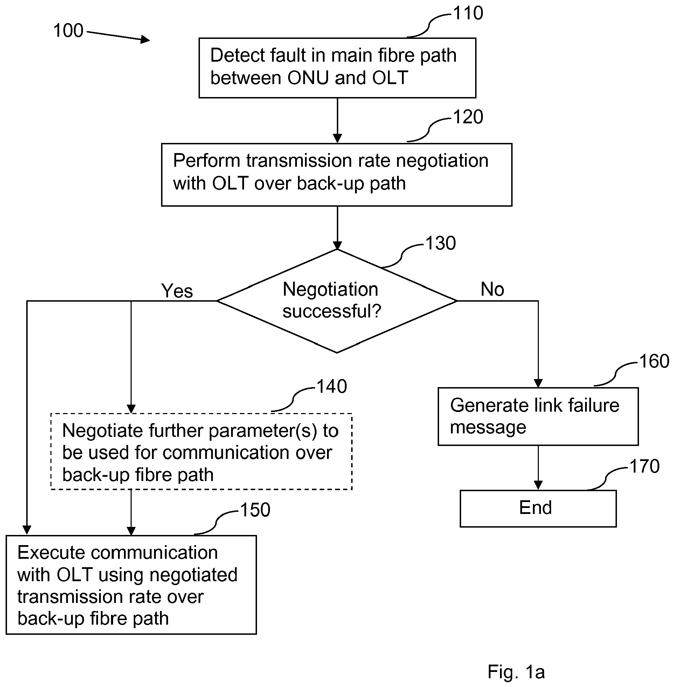

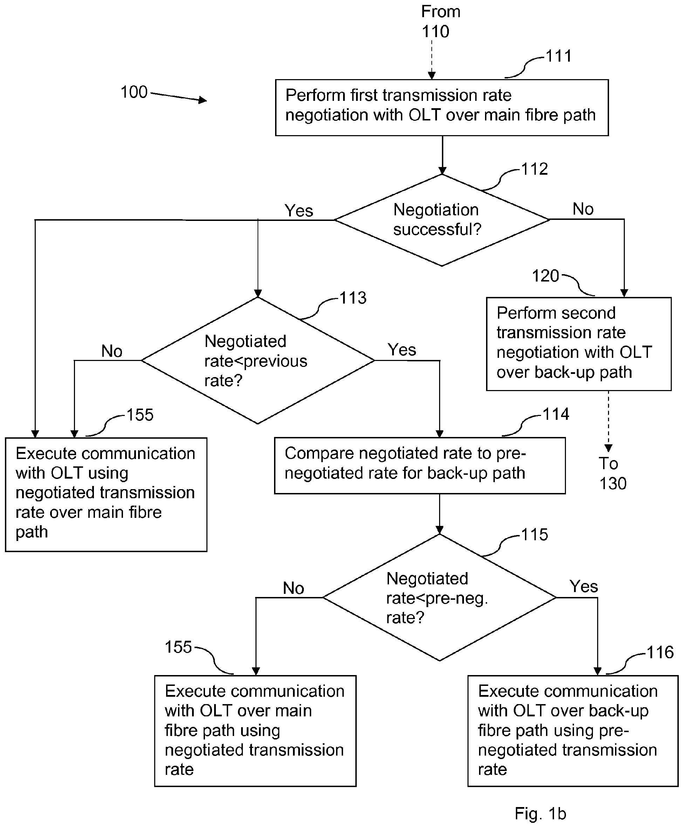

An exemplifying embodiment of a method in an ONU in a fibre optic access network, the fibre optic access network comprising at least one OLT and two fibre paths or links through the fibre optic access network, a main fibre path and a back-up fibre path, connecting the ONU with the OLT for enabling the ONU to communicate over the fibre optic access network will now be described with reference to figure 1 a. Figure 1 a is a flowchart of an exemplifying embodiment of a method in ONU for enabling the ONU to communicate over the optic fibre access network.

In this example, the method 100 in an ONU for enabling the ONU to communicate over the optic fibre access network comprises detecting 110 a fault in the main path between the ONU and the OLT, during ongoing communication. The method also comprises performing 120 a transmission rate negotiation with the OLT over the back-up path. When a transmission rate is agreed upon between the ONU and the OLT during the transmission rate negotiation with regard to communication over the back-up path, the method comprises executing 150 communications with the OLT using the agreed transmission rate over the back-up path.

This exemplifying method has several advantages. By providing a back-up path between the ONU and the at least one OLT, a cost effective way to protect the optic fibre access network is achieved. By providing a negotiation procedure, the back-up link may be of lower "standard" and thus less expensive. By lower standard is meant that it may not be capable of supporting the same transmission rates as the main fibre link. By providing the negotiation procedure, communication may still be possible, but at a reduced rate. In an example the two fibre links are not of the same length, e.g. due to running between the ONU and the OLT along different routes or paths. Consequently, they may not be able to support the same transmission rates even though the fibre links themselves may be of the same quality, since the longer fibre path may typically not be capable of supporting transmission rates as high as the shorter fibre path. It may be desirable to make the two fibre paths run along different routes in order to further increase robustness. In case one fibre link should be broken due to a cut, the other fibre cable will not be subject to the same cut if it runs along a different path. In such cases, the negotiation of transmission rates enables communication to be executed on the back-up fibre path in case the back-up fibre path does not support communication at the same transmission rate as the main fibre path.

According to an embodiment, the detecting of a fault in the main fibre path between the ONU and the OLT comprises receiving an alarm indicating the fault.

In another example, the detection of a fault in the path between the ONU and the OLT comprises receiving statistical information from an FEC decoder block from which the ONU determines that a fault has occurred.

This means that in one example, the ONU receives an alarm, e.g. from the OLT and the performing 120 of a transmission rate negotiation with the OLT over the back-up path is initiated by the OLT. In another example, the ONU detects the fault in the main path between the ONU and the OLT and initiates the performing 120 of a transmission rate negotiation with the OLT over the back-up path.

According to an embodiment, the alarm is one of "loss of signal", "loss of synchronization", "low signal level", "loss of data structure" and "high bit error rate".

An example of "loss of data structure" is loss of bytes, loss of words, loss of blocks or loss of frames. All of these alarms described above will indicate to the ONU a fault has occurred on the main fibre path toward the OLT and will trigger the ONU to perform a transmission rate negotiation with the OLT over the back-up path.

According to still an embodiment, the method in the ONU further comprises negotiating 140 one or more further parameters to be used for communication on the back-up fibre path between the ONU and the OLT.

There are other parameters, which when used for communication on a fibre path will affect the transmission rate or the probability of being able to successfully communicate at a certain transmission rate without excess bit error rate. Some examples of such parameters are Forward Error Correction, FEC, cryptographic capabilities and usage, modulation format and parameters.

According to an embodiment, the transmission rate negotiation with the OLT comprises confirming use of a pre-negotiated transmission rate with regard to communication over the back-up path.

In an example, the ONU performs the transmission rate negotiation with the OLT over the back-up path before any fault is detected in the main fibre path. This means that in case a failure occurs in the main fibre path, the ONU is able to quickly switch over to the back-up path. In one example, the transmission rate over the back-up fibre path is negotiated before any session is ongoing between the ONU and the OLT over the main fibre path and stored within the ONU. In another example, the transmission rate is negotiated over the back-up fibre path when communication is ongoing over the main fibre path.

Figure 1b is a flowchart of an exemplifying embodiment of a method in ONU for enabling the ONU to communicate over the optic fibre access network.

According to an exemplifying embodiment, wherein upon detecting 110 a fault in the main link between the ONU and the OLT, the method further comprises, before performing 120 a transmission rate negotiation with the OLT over the back-up fibre path: performing 111 a first transmission rate negotiation with the OLT over the main path. If a transmission rate is agreed upon between the ONU and the OLT during the first transmission rate negotiation 111, the method comprises executing 155 communications with the OLT using the agreed transmission rate over the main path. If a transmission rate is not agreed upon between the ONU and the OLT during the first transmission rate negotiation 111, the method comprises performing 120 a second transmission rate negotiation with the OLT over the back-up path. When a transmission rate is agreed upon between the ONU and the OLT during the second transmission rate negotiation, the method comprises executing 150 communications with the OLT using the agreed transmission rate over the backup path.

In this embodiment, it is preferred to use the main fibre path for executing communication with the OLT. In such a case, the ONU first attempts to reestablish connection with the OLT via the main fibre path and tries to negotiate a transmission rate with the OLT over the main fibre path. This is illustrated in figure 1b by step 111. If the negotiation with the OLT over the main fibre path is not successful, then the method continues to step 120 which is described in figure 1 a. In this exemplifying embodiment, if the negotiation is successful then communication is executed with the OLT over the main fibre path as indicated in step 155.

In an example, the method comprises determining the severity of the fault indicated in the alarm. For example, "loss of signal" will cause the ONU to directly initiate transmission rate negotiation with the OLT over the back-up path, whereas for example "low signal level" or "high bit error rate" will cause the ONU to first negotiate a new transmission rate over the main fibre, which transmission rate probably will be lower than the currently used transmission rate, before initiating transmission rate negotiation with the OLT over the back-up fibre path. In this example, in case the transmission rate negotiation with the OLT over the main fibre path is successful, the ONU compares the negotiated transmission rate over the main fibre path to a pre-negotiated transmission rate over the back-up fibre path, and depending on the result of this comparison the ONU decides to either execute communication to the OLT over the main fibre path using the negotiated transmission rate or to execute communication to the OLT over the back-up fibre path using the pre-negotiated transmission rate

According to still an embodiment, the first transmission rate negotiation 111 with the OLT over the main path results in a transmission rate which is lower than the transmission rate used before the detection of the fault in the main fibre path between the ONU and the OLT. The method then further comprises comparing 114 the negotiated transmission rate between the ONU and the OLT over the main path with the pre-negotiated transmission rate between the ONU and the OLT over the backup path. If the negotiated transmission rate over the main path is lower than the pre-negotiated transmission rate over the back-up path, the method comprises executing 116 communications to the OLT over the backup path using the pre-negotiated transmission rate. If the negotiated transmission rate over the main path is higher than the pre-negotiated transmission rate over the back-up path, then the method comprises executing 155 communications to the OLT over the main path using the negotiated transmission rate.

If the first transmission rate negotiation 111 with the OLT over the main path is successful, then the negotiated transmission rate can be the same, higher or lower than the transmission rate used before the detection of the fault in the main fibre path. If the negotiated transmission rate is the same or higher than the transmission rate used before the detection of the fault in the main fibre path, then this negotiated transmission rate is used when executing 155 communication to the OLT over the main fibre path. This is illustrated in figure 1b by step 113, i.e. checking if the negotiated transmission rate is lower than the transmission rate used before the detection of the fault in the main fibre path.

If the negotiated transmission rate is lower than the transmission rate used before the detection of the fault in the main fibre path, then it might be advantageous to execute communication over the back-up fibre path. It may be that the negotiated transmission rate over the main fibre path is lower than the transmission rate used before the detection of the fault in the main fibre path but still higher than the pre-negotiated transmission rate over the back-up path.

To find this out, the method comprises comparing 114 the negotiated rate to a pre-negotiated transmission rate over the back-up path. As was described above, the transmission rate over the back-up path is in an example negotiated beforehand with the OLT.

If the negotiated transmission rate over the main path is lower than the pre-negotiated transmission rate over the back-up path, the method comprises executing 116 communications to the OLT over the backup path using the pre-negotiated transmission rate. If, on the other hand, the negotiated transmission rate over the main path is higher than the pre-negotiated transmission rate over the back-up fibre path, the method comprises executing 155 communications to the OLT over the main path using the negotiated transmission rate.

According to an embodiment, the ONU communicates with two physically distinct OLTs over the fibre optic network, a main OLT connected to the ONU via the main fibre path and a back-up OLT connected to the ONU via the back-up fibre path.

According to still an embodiment, all negotiation messages which are sent to the main OLT in the transmission rate negotiation with the ONU over the main fibre path are also sent to the back-up OLT over the back-up fibre path.

In case the ONU communicates with two separate OLTs over the fibre optic network, a main OLT connected to the ONU via the main fibre path and a back-up OLT connected to the ONU via the back-up fibre path, sending all transmission rate negotiation messages also to the back-up OLT, which transmission rate negotiation messages are destined to the main OLT, enables the back-up OLT to "monitor" the main OLT. In other words, the back-up OLT can deduce from the transmission negotiation messages sent from the ONU to the main OLT, if the transmission rate negotiation is successful. In case the transmission rate negotiation is not successful, the back-up OLT is in this way enabled to take action as will be described below.

According to still an embodiment of the method in the ONU, the transmission rate negotiation comprises first synchronising the ONU and the backup OLT before the negotiation of transmission rate is performed.

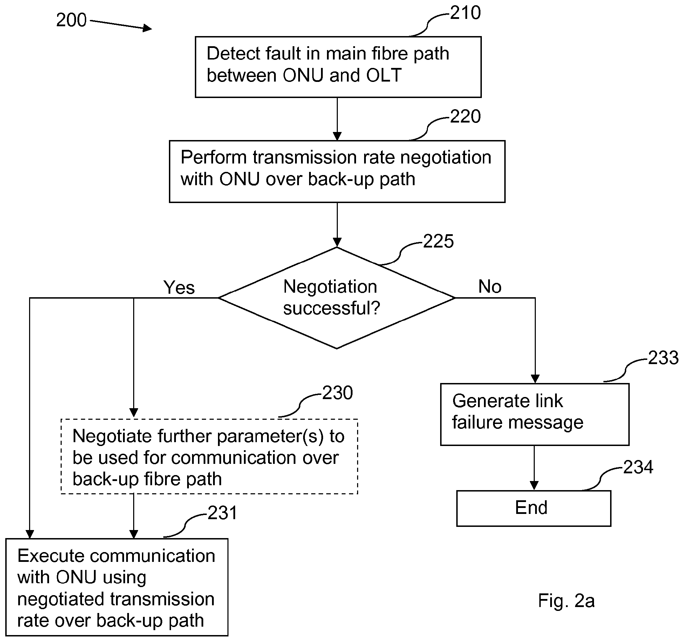

An exemplifying embodiment in an Optical Line Terminal, OLT, in a fibre optic access network, the fibre optic access network comprising at least two fibre paths between the OLT and an Optical Network Unit, ONU, a main fibre path and a back-up fibre path, for enabling the ONU to communicate over the fibre optic access network will now be described with reference to figure 2a.

Figure 2a is a flowchart of an exemplifying embodiment of a method in an OLT enabling an ONU to communicate over the fibre optic access network.

According to an exemplifying embodiment of the method 200 in the OLT, the method comprises detecting 210 a fault in the main fibre path between the OLT and the ONU, during ongoing communication. The method also comprises performing 220 a transmission rate negotiation with the ONU over the back-up path upon detecting the fault in the main fibre path. When a transmission rate is agreed upon between the OLT and the ONU, during the transmission rate negotiation with regard to communication over the back-up fibre path, the method comprises executing 231 communications with the ONU using the agreed transmission rate over the back-up fibre path.

This exemplifying method has several advantages. By providing a back-up path between the ONU and the OLT, a cost effective way to protect the optic fibre access network is achieved. By providing a negotiation procedure, the back-up link may be of lower "standard" and thus less expensive. By lower standard is meant that it may not be capable of supporting the same transmission rates as the main fibre link. By providing the negotiation procedure, communication may still be possible, but at a reduced rate. In an example the two fibre links are not of the same length, e.g. due to running between the ONU and the OLT along different routes or paths or e.g. due to being connected to separate physical OLTs. Consequently, they may not be able to support the same transmission rates even though the fibre links themselves may be of the same quality, since the longer fibre path may typically not be capable of supporting transmission rates as high as the shorter fibre path. It may be desirable to make the two fibre paths run along different routes in order to further increase robustness. In case one fibre link should be broken due to a cut, the other fibre cable will not be subject to the same cut if it runs along a different route. In such cases, the negotiation of transmission rates enables communication to be executed on the back-up fibre path in case the back-up fibre path does not support communication at the same transmission rate as the main fibre path.

According to an embodiment, the detection of a fault in the main fibre path between the OLT and the ONU comprises receiving an alarm indicating the fault.

This means that in one example, the OLT receives an alarm, e.g. from the ONU and the performing 220 of a transmission rate negotiation with the ONU over the back-up path is initiated by the ONU. In another example, the OLT detects the fault in the main path between the OLT and the ONU and initiates the performing 220 of a transmission rate negotiation with the OLT over the back-up path.

In another example, the detection of a fault in the path between the OLT and the ONU comprises receiving statistical information from an FEC decoder block from which the OLT determines that link performance has degraded to unacceptable levels.

According to an embodiment, the alarm is one of "loss of signal", "loss of synchronization", "low signal level", "loss of data structure" and "high bit error rate".

An example of "loss of data structure" is loss of bytes, loss of words, loss of blocks or loss of frames. All of these alarms described above will indicate to the OLT a fault has occurred on the main fibre path toward the ONU and will trigger the OLT to perform a transmission rate negotiation with the ONU over the back-up path. It is understood that, in the event that main and backup OLTs are physically separate equipment, a communications link between them enables them to exchange the necessary status and event information.

According to an embodiment, , the method in the OLT further comprises negotiating 230 one or more further parameters to be used for communication on the back-up fibre path between the OLT and the ONU.

There are other parameters, which when used for communication on a fibre path will affect the transmission rate or the probability of being able to successfully communicate at a certain transmission rate without excess bit error rate. Some examples of such parameters are Forward Error Correction, FEC, cryptographic capabilities and usage, modulation format and parameters.

According to an embodiment, the transmission rate negotiation with the ONU comprises confirming use of a pre-negotiated transmission rate with regard to communication over the back-up path.

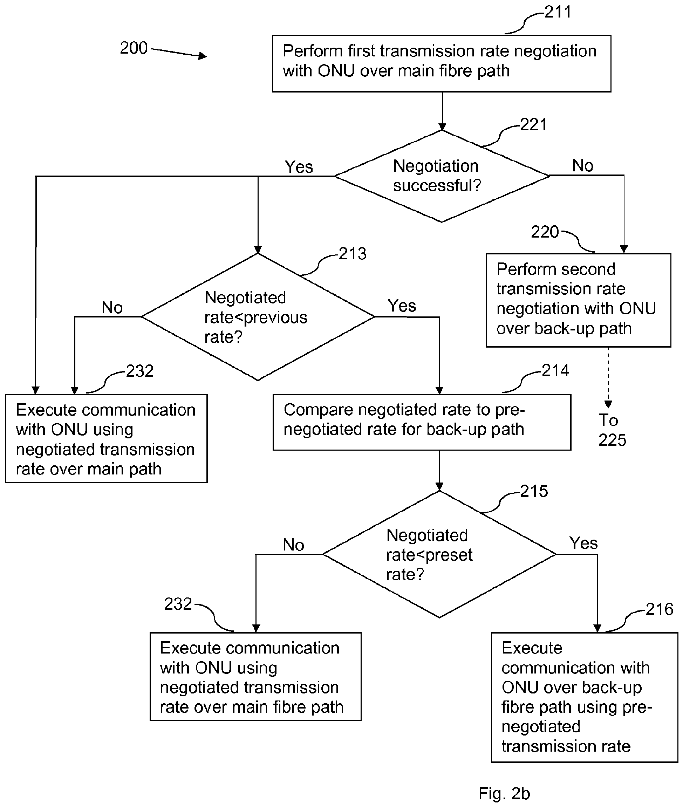

Figure 2b is a flowchart of an exemplifying embodiment of a method in an OLT for enabling the ONU to communicate over the optic fibre access network.

According to an exemplifying embodiment, wherein upon detecting a fault in the main link between the OLT and the ONU, the method further comprises before performing 210 a first transmission rate negotiation with the ONU over the backup path, performing 211 a first transmission rate negotiation with the ONU over the main fibre path. If a transmission rate is agreed upon between the ONU and the OLT during the first transmission rate negotiation, the method comprises executing 232 communications with the ONU using the agreed transmission rate over the main path. If a transmission rate is not agreed upon between the ONU and the OLT during the first transmission rate negotiation, the method comprises performing 210 a second transmission rate negotiation with the ONU over the back-up path. When a transmission rate is agreed upon between the ONU and the OLT during the second transmission rate negotiation, the method comprises executing 231 communications with the ONU using the agreed transmission rate over the backup path.

In this embodiment, it is preferred to use the main fibre path for executing communication with the ONU. In such a case, the OLT first attempts to reestablish connection with the ONU via the main fibre path and tries to negotiate a transmission rate with the ONU over the main fibre path. This is illustrated in figure 2b by step 211. If the negotiation with the ONU over the main fibre path is not successful, then the method continues to step 220 which is described in figure 2a. In this exemplifying embodiment, if the negotiation is successful then communication is executed with the ONU over the main fibre path as indicated in step 232.

According to an embodiment, the first transmission rate negotiation 211 with the ONU over the main path results in a transmission rate which is lower than the transmission rate used before the detection of the fault in the fibre path between the ONU and the OLT, the method further comprising comparing 214 the negotiated transmission rate between the ONU and the OLT over the main path with the pre-negotiated transmission rate between the ONU and the OLT over the backup path. If the negotiated transmission rate over the main path is lower than the pre-negotiated transmission rate over the back-up path, the method comprises executing 216 communications to the ONU over the backup path using the pre-negotiated transmission rate. If the negotiated transmission rate over the main path is higher than the pre-negotiated transmission rate over the back-up path, the method comprises executing 232 communications to the ONU over the main path using the negotiated transmission rate.

If the first transmission rate negotiation 211 with the ONU over the main path is successful, then the negotiated transmission rate can be the same, higher or lower than the transmission rate used before the detection of the fault in the main fibre path. If the negotiated transmission rate is the same or higher than the transmission rate used before the detection of the fault in the main fibre path, then this negotiated transmission rate is used when executing 232 communication to the ONU over the main fibre path. This is illustrated in figure 2b by step 213, i.e. checking if the negotiated transmission rate is lower than the transmission rate used before the detection of the fault in the main fibre path

If the negotiated transmission rate is lower than the transmission rate used before the detection of the fault in the main fibre path, then it might be advantageous to execute communication over the back-up fibre path. It may be that the negotiated transmission rate over the main fibre path is lower than the transmission rate used before the detection of the fault in the main fibre path but still higher than the pre-negotiated transmission rate over the back-up path.

To find this out, the method comprises comparing 214 the negotiated rate to a pre-negotiated transmission rate over the back-up path. As was described above, the transmission rate over the back-up path is in an example negotiated beforehand with the ONU.

If the negotiated transmission rate over the main path is lower than the pre-negotiated transmission rate over the back-up path, the method comprises executing 216 communications to the ONU over the backup path using the pre-negotiated transmission rate. If, on the other hand, the negotiated transmission rate over the main path is higher than the pre-negotiated transmission rate over the back-up fibre path, the method comprises executing 232 communications to the ONU over the main path using the negotiated transmission rate.

According to still an embodiment, the OLT is a main OLT connected to the ONU via the main fibre path and the back-up fibre path connects the ONU and a back-up OLT.

In this case, the main OLT and the back-up OLT are physically different entities. In an example, they are located in the same geographical location and in another example, they are located at two different geographical locations.

In an example of the method in a main OLT, wherein in case the back-up fibre path is to be used, the method comprises sending an instruction to the back-up OLT, the instruction instructing the back-up OLT to initiate transmission rate negotiation with the ONU over the back-up fibre path.

In this example, the main OLT determines, e.g. as explained above in step 216 that the communication is to be executed over the back-up fibre path. The main OLT then sends a signal or otherwise instructs the back-up OLT that it should execute communication to the ONU over the back-up fibre path.

In still an example of the method in a main OLT, all negotiation messages which are sent to the ONU in the transmission rate negotiation with the ONU over the main fibre path are also sent to the back-up OLT.

In yet an example of the method in a main OLT, the method further comprises receiving a request from the ONU to establish communication with the back-up OLT, wherein the main OLT sends a request to the back-up OLT to execute communication to the ONU over the back-up fibre path.

This situation may arise when it is the ONU that determines that the back-up fibre path is to be used to execute communication to an OLT, in this case the back-up OLT. Then the ONU sends a request to the main OLT where the ONU requests the communication to be executed over the back-up path with the back-up OLT. Then the main OLT in turn sends a request to the back-up OLT to execute communication to the ONU over the back-up fibre path.

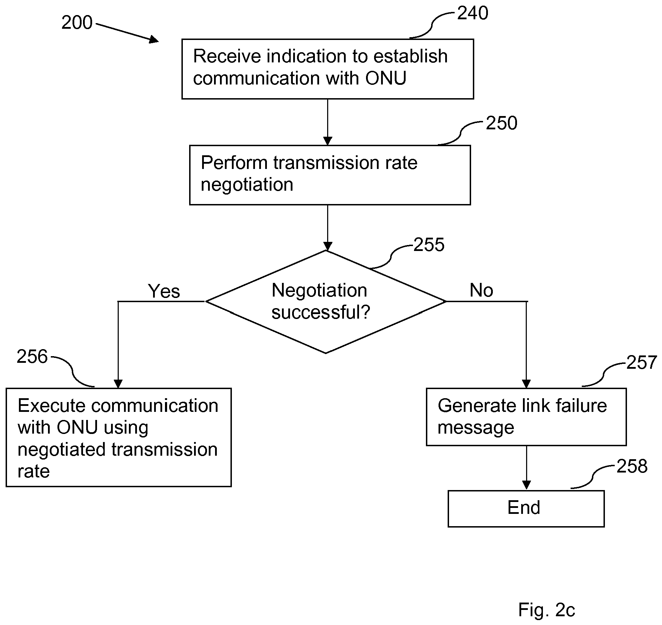

Figure 2c is a flowchart of an exemplifying embodiment of a method in an OLT, wherein the OLT is a back-up OLT.

According to an embodiment of the method in the OLT, the OLT is a back-up OLT connected to the ONU via the back-up fibre path and the main fibre path connects the ONU and a main OLT (not shown in figure 2c).

In an example of the method in a back-up OLT, the method comprises receiving 240 an indication that communication needs to be executed on a link between the back-up OLT and the ONU, and performing 250 transmission rate negotiation with the ONU over the back-up fibre path. If the transmission rate negotiation does not result in an agreed transmission rate to be used for executing communication between the ONU and the back-up OLT over the back-up fibre path, then the method comprises generating 257 a link failure message. If a transmission rate is agreed upon between the ONU and the back-up OLT, then the method comprises executing 256 communication with the back-up OLT using the agreed transmission rate over the back-up fibre path.

In case the transmission rate negotiation fails, it is not possible to execute communication at any transmission rate that is supported by both the ONU and the OLT. In such a case a link failure message is generated 257.

In yet an example of the method in a back-up OLT, the method comprises receiving 240 the indication comprises receiving a request, from the main OLT, to initiate transmission rate negotiation with the ONU over the back-up fibre path.

As has been described above, in case it is the ONU that determines that the back-up fibre path is to be used to execute communication to an OLT, in this case the back-up OLT, then the ONU sends a request to the main OLT where the ONU requests the communication to be executed over the back-up path with the back-up OLT. Then the main OLT in turn sends a request to the back-up OLT to execute communication to the ONU over the back-up fibre path.

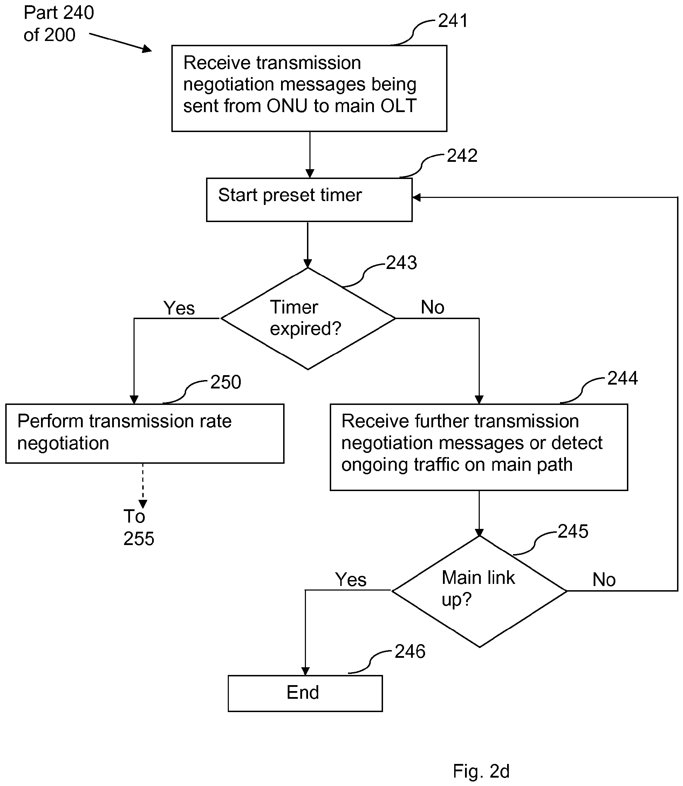

Figure 2d is a flowchart of an exemplifying embodiment of a method in an OLT, wherein the OLT is a back-up OLT.

In yet an example of the method in a back-up OLT, wherein receiving 240 the indication comprises receiving 241 transmission rate negotiation messages from the ONU destined for the main OLT.

This means that the indication which is received 240 to establish communication with the ONU comprises receiving a copy of all transmission rate negotiations messages which are sent to the main OLT.

In still an example, of the method in a back-up OLT, the method further comprises determining, from the received transmission rate negotiation messages from the ONU, that an un-recoverable link failure has occurred on the main fibre path between the ONU and the main OLT.

This means that since the back-up OLT receives a copy of all transmission rate negotiations messages which are sent to the main OLT, the back-up OLT can deduce from the received messages if the transmission rate negotiation between the ONU and the main OLT is being successful or not.

In a further example, of the method in a back-up OLT, the transmission rate negotiation between the back-up OLT and the ONU over the back-up fibre path comprises confirming use of a pre-negotiated transmission rate between the ONU and the back-up OLT over the back-up fibre path

In a further example, of the method in a back-up OLT, wherein the determining from the received transmission rate negotiation messages from the ONU or the main OLT that an un-recoverable link failure has occurred on the main fibre path comprises starting 242 a preset timer when a transmission rate negotiation message is received 241 from the ONU destined for the main OLT; and if the timer expires before receiving an expected follow-up transmission rate negotiation message from the ONU destined for the main OLT, then performing 250 transmission rate negotiation with the ONU over the back-up path.

As transmission rate negotiation messages from the ONU destined for the main OLT are also received by the back-up OLT, the back-up OLT starts a preset timer 242 as it receives a transmission rate negotiation message. If the timer expires before any other transmission rate negotiation message is received then the back-OLT determines that the transmission rate negotiation was unsuccessful. Likewise, if the back-up OLT can deduce that communication cannot be executed on the main fibre path due to an un-recoverable link failure has occurred on the main fibre path between the ONU and the main OLT, the back-up OLT performs 250 transmission rate negotiation with the ONU over the back-up fibre path.

However, if a subsequent transmission negotiation message from the ONU destined for the main OLT is received 244 by the back-up OLT or a transmission negotiation message from the main OLT destined for the ONU is received 244 by the back-up OLT before the timer expires, then the back-up OLT can determine if the main link is not up but transmission rate negotiation is still ongoing on the main fibre path and the back-up OLT again starts 242 the preset timer.

The back-up OLT can detect 244 that communication is executed on the main fibre path between the ONU and the main OLT, e.g. by receiving a confirmation message from either the ONU or the main OLT. If this is the case, the method is ended 246, meaning that the back-up OLT will go back to a stand-by mode.

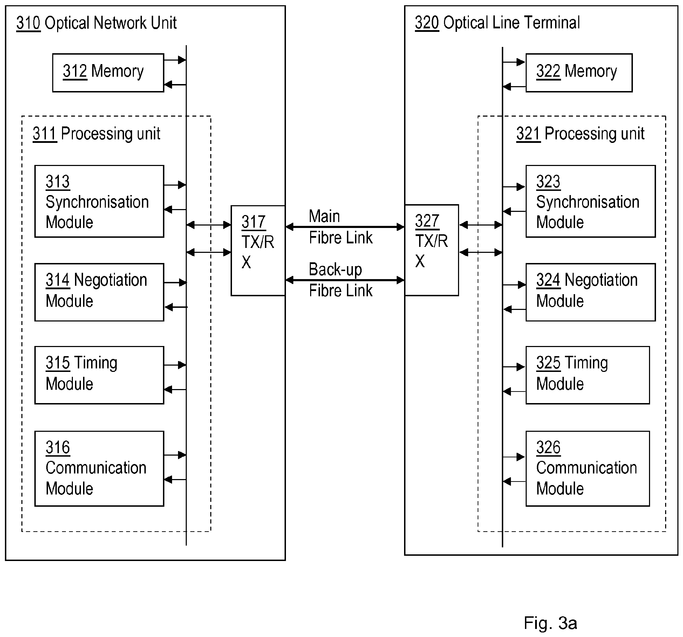

Exemplifying embodiments of an ONU and an OLT in a fibre optic access network, the ONU and the OLT being adapted to enable the ONU to communicate with the OLT will now be described with reference to figures 3a-d. The ONU and the OLT have the same objects, advantages and technical features as the methods therein described above. Therefore, the ONU and the OLT will be described briefly in order to avoid unnecessary repetition.

Figure 3a is a block diagram schematically illustrating an exemplifying embodiment of an ONU and an OLT connected by two fibre link paths.

It will be appreciated that the OLT in an example is adapted to comprise two roles, a main role and a backup role, and that these roles may be implemented either in a single OLT equipment or in two distinct OLT equipments.

In figure 3a, the ONU and the OLT are illustrated having transceiver arrangements 317 and 327. These are adapted to enable the ONU 310 and the OLT 320 to communicate with each other via a main fibre link or fibre path; or a back-up fibre link or fibre path. A transceiver arrangement may comprise one or more transmitters and one or more receivers.

The OLT is adapted to perform a main OLT role or function and a backup OLT role or function and these roles or functions may be implemented either in a single OLT equipment or in two distinct OLT equipments.

According to an exemplifying embodiment of the Optical Network Unit, ONU 310, in a fibre optic access network, the fibre optic access network comprising at least one Optical Line Terminal, OLT, 320 and two fibre paths through the fibre optic network, a main path and a back-up path, connecting the ONU 310 with the OLT 320, the ONU being adapted to enable the ONU 310 to communicate over the fibre optic access network, the ONU 310 comprises a processing unit 311 adapted to detect a fault in the main path between the ONU 310 and the OLT 320, during ongoing communication. The processing unit 311 is also adapted to perform a transmission rate negotiation with the OLT 320 over the back-up path. When a transmission rate is agreed upon between the ONU 310 and the OLT 320 during the transmission rate negotiation with regard to communication over the back-up path, the processing unit 311 is adapted to execute communication with the OLT 320 using the agreed transmission rate over the back-up path.

According to an embodiment of the Optical Network Unit, the detection of a fault in the main fibre path between the ONU 310 and the OLT 320 comprises receiving an alarm indicating the fault.

The ONU is adapted to detect the fault, e.g. by the transceiver arrangement 317. The transceiver arrangement 317 is then adapted to generate an alarm which is sent to the processing unit. Hence, the detection of a fault in the main fibre path between the ONU 310 and the OLT 320 by reception of an alarm indicating the fault means that the processing unit 311 receives the alarm from the transceiver arrangement 317.

In an example, the transceiver arrangement 317 is adapted to perform comprises signal recovery, framing alignment, error checking and correcting functions.

In yet an embodiment, the alarm is one of "loss of signal", "loss of synchronization", "low signal level", "loss of data structure" and "high bit error rate".

According to still an embodiment, the processing unit 311 is further adapted to negotiate one or more further parameters to be used for communication on the back-up fibre path between the ONU 310 and the OLT 320.

According to an embodiment, the transmission rate negotiation with the OLT 320 comprises confirming use of a pre-negotiated transmission rate with regard to communication over the back-up path.

In still an embodiment, wherein upon detecting a fault in the main link between the ONU and the OLT, the processing unit 311 is further adapted to, before performing a transmission rate negotiation with the OLT 320 over the back-up fibre path, perform a first transmission rate negotiation with the OLT 320 over the main path. If a transmission rate is agreed upon between the ONU 310 and the OLT 320 during the first transmission rate negotiation, the processing unit 311 is adapted to execute communication with the OLT 320 using the agreed transmission rate over the main path. If a transmission rate is not agreed upon between the ONU 310 and the OLT 320 during the first transmission rate negotiation, the processing unit 311 is adapted to perform a second transmission rate negotiation with the OLT 320 over the back-up path. When a transmission rate is agreed upon between the ONU 310 and the OLT 320 during the second transmission rate negotiation, the processing unit 311 is adapted to execute communication with the OLT using the agreed transmission rate over the backup path.

In yet an embodiment, wherein the first transmission rate negotiation with the OLT 320 over the main path results in a transmission rate which is lower than the transmission rate used before the detection of the fault in the main fibre path between the ONU 310 and the OLT 320, the processing unit 311 is further adapted to compare the negotiated transmission rate between the ONU 310 and the OLT 320 over the main path with the pre-negotiated transmission rate between the ONU 310 and the OLT 320 over the backup path. If the negotiated transmission rate over the main path is lower than the pre-negotiated transmission rate over the back-up path, then the processing unit 311 is adapted to execute communication to the OLT 320 over the backup path using the pre-negotiated transmission rate. If the negotiated transmission rate over the main path is higher than the pre-negotiated transmission rate over the back-up path, then the processing unit 311 is adapted to execute communication to the OLT 320 over the main path using the negotiated transmission rate.

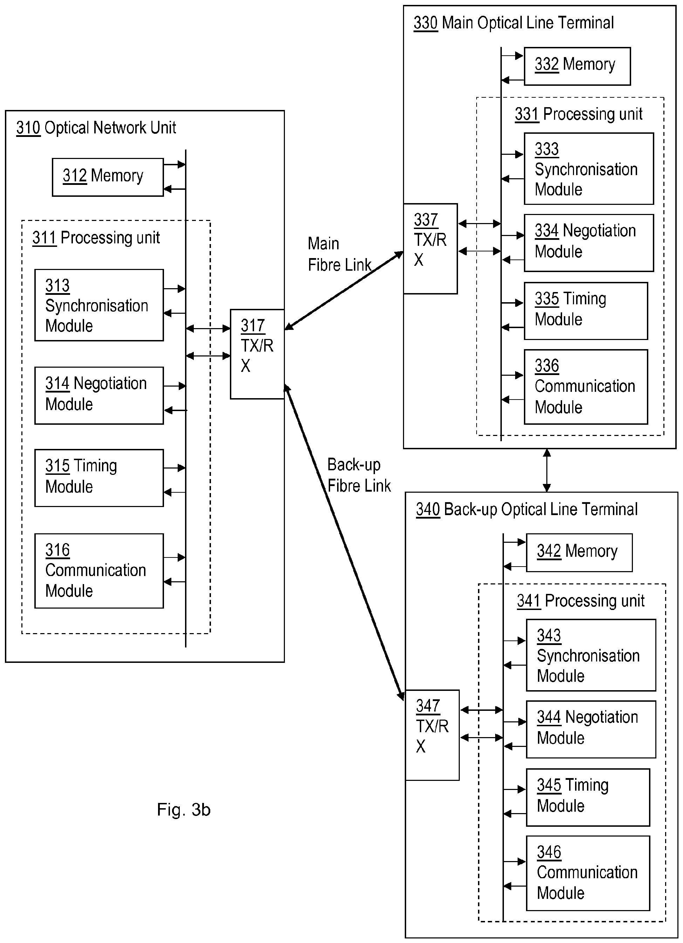

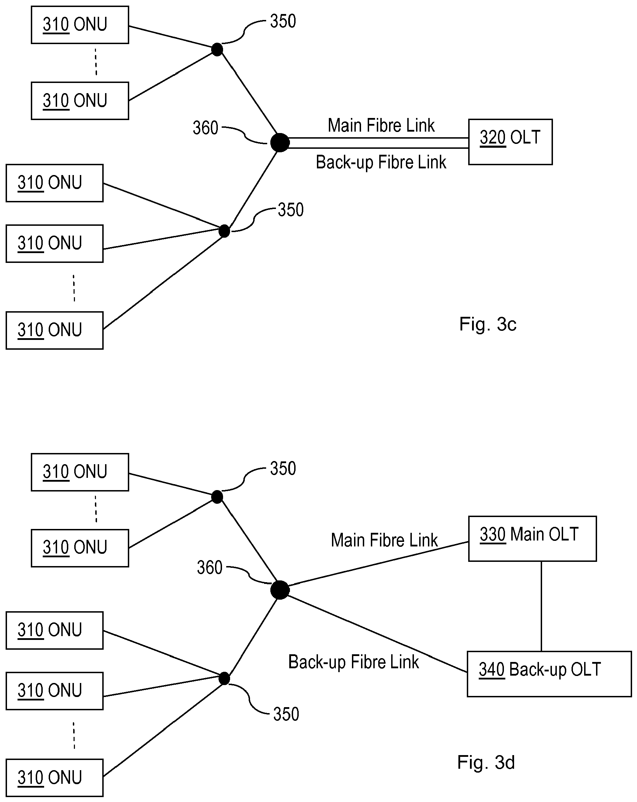

Figures 3b and 3d illustrate an example wherein an ONU 310 communicates with two separate OLTs 330 and 340.

According to an embodiment, the ONU 310 is adapted to communicate with two separate OLTs over the fibre optic network, a main OLT 330 connected to the ONU via the main fibre path and a back-up OLT 340 connected to the ONU via the back-up fibre path.

As can be seen in the figures 3b and 3d, the main OLT 330 and the back-up OLT are each connected to an ONU 310 by means of two fibre paths, a main fibre path and a back-up fibre path. Typically, the main OLT 330 serves a first set of ONUs and the back-up OLT serves other ONUs (not shown) for which ONUs the back-up OLT is a main OLT. Likewise the main OLT 330 may act as a back-up OLT for still other ONUs (not shown) being connected to a still further OLT (not shown).

Figures 3c and 3d also illustrate that the main fibre path and the back-up fibre path can be shared by a plurality of ONUs 310. In the embodiment illustrated in figures 3c and 3d, various passive or semi-passive devices, e.g. power splitters, wavelength filters and/or optical switches, 350 and 360 could be used to enable several ONUs 310 sharing the respective main and back-up fibre paths.

It shall be pointed out, that in case there should be any active equipment in points 350 and 360, no active equipment is present between the point 360 and the respective main OLT 330 or the back-up OLT 440.

In yet another example, the redundant links go all the way to the ONUs 310, such that splitting nodes 350, 360 exist separately for each of main and backup links. In that configuration, an ONU 310 is adapted to distinguish and negotiate main and backup independently.

In yet another example, not illustrated in figure 3d, there are N number of main fibre links, one for each of the N sets of ONUs 310 where a set is either a single ONU or multiple ONUs, but just one back-up fibre running from the point 360 to the back-up OLT 340.

According to still an embodiment, the ONU 310 is adapted to send all negotiation messages, which are sent to the main OLT 330 in the transmission rate negotiation with the ONU 310 over the main fibre path, also to the back-up OLT 340 via the back-up fibre path.

In yet an embodiment, the processing unit 311 is adapted to synchronise the ONU 310 and the OLT 320, 330, 340 before performing negotiation of transmission rate.

According to an exemplifying embodiment of an Optical Line Terminal, OLT 320, in a fibre optic access network, the fibre optic access network comprising at least two fibre paths between the OLT and an Optical Network Unit, ONU, (310) a main fibre path and a back-up fibre path, the OLT being adapted to enable the ONU to communicate over the fibre optic access network, the OLT comprises a processing unit 321 adapted to detect a fault in the main fibre path between the OLT 320 and the ONU 310, during ongoing communication. The processing unit 321 is also adapted to perform a transmission rate negotiation with the ONU 310 over the back-up path upon detecting the fault in the main fibre path. When a transmission rate is agreed upon between the OLT 320 and the ONU 310, during the transmission rate negotiation with regard to communication over the back-up fibre path, the processing unit 321 is adapted to execute communication with the ONU 310 using the agreed transmission rate over the back-up fibre path.

According to an embodiment of the OLT 320, the detection of a fault in the main fibre path between the OLT 320 and the ONU 310 comprises receiving an alarm indicating the fault.

According to still an embodiment, the alarm is one of "loss of signal", "loss of synchronization", "low signal level", "loss of data structure" and "high bit error rate".

In yet an embodiment, the processing unit 321 is further adapted to negotiate one or more further parameters to be used for communication on the back-up fibre path between the OLT 320 and the ONU 310.

In a further embodiment, the transmission rate negotiation with the ONU 310 comprises confirming use of a pre-negotiated transmission rate with regard to communication over the back-up path.

According to an embodiment, wherein upon detecting a fault in the main link between the ONU 310 and the OLT320, the processing unit 321 is further adapted to, before performing a first transmission rate negotiation with the OLT 320 over the back-up path, perform a first transmission rate negotiation with the ONU 310 over the main fibre path. If a transmission rate is agreed upon between the ONU 310 and the OLT 320 during the first transmission rate negotiation, the processing unit 321 is adapted to execute communication with the ONU 310 using the agreed transmission rate over the main path. If a transmission rate is not agreed upon between the ONU 310 and the OLT 320 during the first transmission rate negotiation, the processing unit 321 is adapted to perform a second transmission rate negotiation with the ONU 310 over the back-up path. When a transmission rate is agreed upon between the ONU 310 and the OLT 320 during the second transmission rate negotiation, the processing unit 321 is adapted to execute communication with the ONU 310 using the agreed transmission rate over the backup path.

According to still an embodiment, of the OLT 320, the first transmission rate negotiation with the ONU 310 over the main path results in a transmission rate which is lower than the transmission rate used before the detection of the fault in the link between the ONU 310 and the OLT 320, the processing unit 321 is further adapted to compare the negotiated transmission rate between the ONU 310 and the OLT 320 over the main path with the pre-negotiated transmission rate between the ONU 310 and the OLT 320 over the backup path. If the negotiated transmission rate over the main path is lower than the pre-negotiated transmission rate over the back-up path, then the processing unit 321 is adapted to execute communication to the ONU 310 over the backup path using the pre-negotiated transmission rate. If the negotiated transmission rate over the main path is higher than the pre-negotiated transmission rate over the back-up path, then the processing unit 321 is adapted to execute communication to the ONU 310 over the main path using the negotiated transmission rate.

In still a further embodiment, the OLT 330 is a main OLT 330 connected to the ONU 310 via the main fibre path and the back-up fibre path connects the ONU 310 and a back-up OLT 340.

In this case, the main OLT and the back-up OLT are physically different entities. In an example, they are located in the same geographical location and in another example, they are located at two different geographical locations.

In an example of the main OLT 330, wherein in case the back-up fibre path is to be used, the processing unit 331 is adapted to send an instruction to the back-up OLT 340, the instruction instructing the back-up OLT 340 to initiate transmission rate negotiation with the ONU 310 over the back-up fibre path.

In yet an example of the main OLT 330, the processing unit 331 is adapted to send all negotiation messages, which are sent to the ONU 310 in the transmission rate negotiation with the ONU 310 over the main fibre path, also to the back-up OLT 340 over the back-up fibre path.

In still an example of the main OLT 330, the processing unit 331 is adapted to receive an alarm indicating a severe failure, wherein communication will not be able to be restored on the main fibre path at any transmission rate. Then the processing unit 331 is adapted to order to the back-up OLT 340 to initiate transmission rate negotiation with the ONU over the back-up path.

In still a further example of the main OLT 330, the processing unit 331 is further adapted to receive a request from the ONU 310 to establish communication with the back-up OLT 340, wherein the processing unit 331 is adapted to send a request to the back-up OLT 340 to execute communication to the ONU 310 over the back-up fibre path.

According to an embodiment, the OLT 340 is a back-up OLT 340 connected to the ONU 310 via the back-up fibre path and the main fibre path connects the ONU 310 and a main OLT 330.

In an example of the back-up OLT 340, the processing unit 341 is further adapted to receive an indication that communication needs to be executed on a link between the back-up OLT 340 and the ONU (310), and to perform transmission rate negotiation with the ONU 310 over the back-up fibre path. If the transmission rate negotiation does not results in an agreed transmission rate to be used for executing communication between the ONU 310 and the back-up OLT 340 over the back-up fibre path, then the processing unit 341 is adapted to generate a link failure message. If a transmission rate is agreed upon between the ONU 310 and the back-up OLT 340, then the processing unit 341 is adapted to execute communication with the back-up OLT 340 using the agreed transmission rate over the back-up fibre path.

In still an example of the back-up OLT 340, the reception of the indication comprises receiving a request, from the main OLT 330, to initiate transmission rate negotiation with the ONU 310 over the back-up fibre path.

In still a further example of the back-up OLT 340, the reception of the indication comprises receiving transmission rate negotiation messages from the ONU 310 destined for the main OLT 330.

In yet an example of the back-up OLT 340, the processing unit 341 is further adapted to determine, from the received transmission rate negotiation messages from the ONU 310, that a un-recoverable link failure has occurred on the main fibre path between the ONU 310 and the main OLT 330.

In a further example of the back-up OLT 340, the transmission rate negotiation between the back-up OLT 340 and the ONU 310 comprises the processing unit 341 being adapted to confirm use of pre-negotiated transmission rate between the ONU 310 and the back-up OLT 340 over the back-up fibre path.

In yet an example of the back-up OLT 340, the processing unit 341 is adapted to, when determining from the received transmission rate negotiation messages from the ONU 310 or the main OLT 330 that a un-recoverable link failure has occurred on the main fibre path, start a preset timer when a transmission rate negotiation message is received from the ONU 310 destined for the main OLT 330. If the timer expires before a receiving an expected follow-up transmission rate negotiation message from the ONU 310 destined for the main OLT 330, then the processing unit 341 is adapted to perform transmission rate negotiation with the ONU 310 over the back-up path.

In the case that the main OLT and the back-up OLT are geographically co-located, the OLT in one example does not duplicate the full functionality of the main OLT. In one example of such an OLT, it comprises only a transceiver arrangement and the back-up OLT is connected to the main OLT, which is located at the same geographical location, via a separate link.

The exemplifying embodiments of the ONU, the OLT and the respective methods therein provides a protection mechanism for the access network that doesn't require active equipment between the end user and the back-up OLT over the protection fibre path. Typically, the OLT is located in a Central Office, CO, of the network operator. It is cost effective since a part of the capacity over a link can be protected, avoiding the potential high costs of providing protection of the full link capacity. The exemplifying embodiments enable a damaged link to be restored, e.g. the main fibre path/link may still be used even though it is damaged by lowering the transmission rate. This way, the main fibre path may still be capable of supporting communication between the ONU and the OLT. Alternatively, if the damaged main fibre path is not capable of supporting communication between the ONU and the OLT, then the back-up fibre path is used to support communication between the ONU and the OLT.

According to an embodiment, when a fault has occurred on the main fibre path resulting in either lowering the transmission rate on the main fibre path or switching to the back-up fibre path, the OLT is adapted to prioritise traffic and selectively discard traffic which exceeds the capacity of the fibre path used for communication. In an example, this is done in a manner such that service level agreements, SLAs, are Quality-of-Service, QoS, requirements or guarantees are fulfilled.

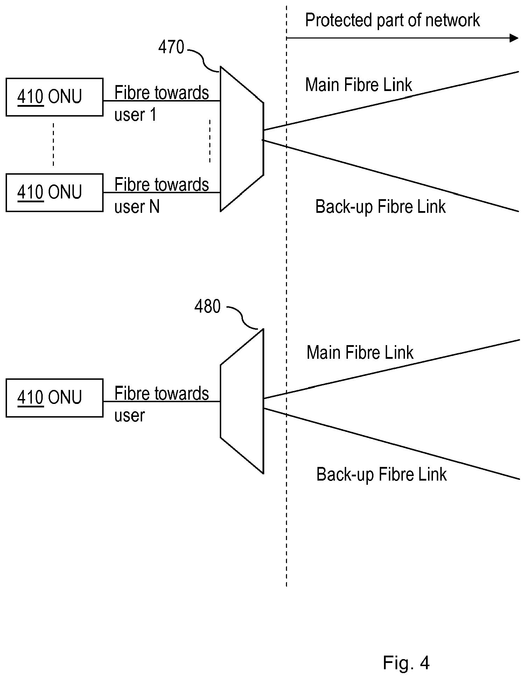

Figure 4 is a block diagram schematically illustrating an exemplifying embodiment of a part of a passive optical network.

Figure 4 illustrates two exemplifying configurations enabling an ONU 419 to communicate over a main fibre path and a back-up fibre path. The upper configuration illustrates N number of ONUs 410 being connected to a 2:N multiplexer 470. The multiplexer 470 is e.g. a power splitter, a wavelength splitter or an Arrayed Waveguide Grating AWG. In case an AWG is used as the multiplexer, an extra port on the AWG is provided to connection of the back-up fibre path. If the multiplexer 470 is a 2:N AWG, the user wavelength will appear differently at the back-up OLT compared to the main OLT; wavelength 1 in the main OLT will correspond to wavelength 2 in the back-up OLT.

The lower configuration illustrates an ONU 410 being connected to an optical 1:2 splitter 480.

In the described embodiments, forward error correction (FEC) may optionally be used. While finding the maximum transmission rate over specific link, FEC can help to give additional link budget. An example of such code is the Reed-Solomon (255,239) code which gives a bandwidth overhead of roughly 7% and increase the link budget with roughly 3-5 dB. There are multiple FEC codes that can be used. For example, two different FEC codes could be supported; one referred to as strong FEC (giving higher link budget increase at the cost of higher bandwidth overhead), and one referred to as weak FEC (giving lower link budget increase at the cost of lower bandwidth overhead). When the end terminals negotiate which transmission rate to use over a link, according to an embodiment, several other parameters may be negotiated, both with regard to communication to the other end terminal and also with regard to communication received from the other end terminal.

The ONU, 310 the OLT 320, the main OLT 330 and the back-up OLT 340 are illustrated in figures 3a and 3b to comprise a respective processing unit 311, 321, 331 and 341 which in turn are illustrated comprising dedicated modules adapted to perform different method steps, e.g. synchronising module, negotiation module, timing module and communication module. It shall be noted that this is merely an exemplifying illustration of the respective processing unit 311, 321, 331 and 341. Further figures 3a and 3b illustrate the ONU, 310 the OLT 320, the main OLT 330 and the back-up OLT 340 comprising a memory 312, 322, 332 and 342. Further, the , 310 the OLT 320, the main OLT 330 and the back-up OLT 340 are illustrated having transceiver arrangements 317, 327, 337 and 347 adapted to enable the ONU 310 to communicate with the other terminals via a main fibre link or fibre path; or a back-up fibre link or fibre path. A transceiver arrangement may comprise one or more transmitters and one or more receivers. Further, figures 3b and 3d illustrate the main OLT and the back-up OLT being connected by a separate link or path. This ensures that the main OLT and the back-up OLT are able to communicate with each other without making use of the main fibre path/link or the back-up fibre path/link.

It shall be noted that the main fibre path and the back-up fibre path may run all the way between the ONU and the OLT, main OLT or back-up OLT. Alternatively, the main fibre path and the back-up fibre path may run only along a part of the way between the ONU and the OLT, main OLT or back-up OLT. Further, in case there is just one OLT adapted to function as a main OLT and a back-up OLT, or in case there are a main OLT and a back-up OLT located at the same geographical location, the main fibre path and the back-up fibre path are in one example running along the same route and in another example running along different routes. Further, the fibre topology can be a tree, a ring or a mixture of the two.

It should be noted that figures 3a and 3b merely illustrates various functional modules and units in the ONU, 310 the OLT 320, the main OLT 330 and the back-up OLT 340 in a logical sense. The functions in practice may be implemented using any suitable software and hardware means/circuits etc. Thus, the embodiments are generally not limited to the shown structures of the ONU, 310 the OLT 320, the main OLT 330 and the back-up OLT 340 and the functional modules and units. Hence, the previously described exemplary embodiments may be realised in many ways. For example, one embodiment includes a computer-readable medium having instructions stored thereon that are executable by the respective processing unit 311, 321, 331 and 341 for performing the method steps of the exemplifying embodiments as set forth in the claims. The instructions executable by the computing system and stored on the computer-readable medium perform the method steps of the exemplifying embodiments as set forth in the claims.

While the embodiments have been described in terms of several embodiments, it is contemplated that alternatives, modifications, permutations and equivalents thereof will become apparent upon reading of the specifications and study of the drawings. It is therefore intended that the following appended claims include such alternatives, modifications, permutations and equivalents as fall within the scope of the embodiments and defined by the pending claims.

## Claims

1. A method (100) in an Optical Network Unit, ONU, in a fibre optic access network, the fibre optic access network comprising at least one Optical Line Terminal, OLT, and two fibre paths through the fibre optic network, a main path and a back-up path, connecting said ONU with said OLT for enabling the ONU to communicate over the fibre optic access network, the method comprising:
- detecting (110) a fault in the main fibre path between said ONU and said OLT, during ongoing communication, **characterised in that**
- in case a fault is detected, performing (120) a transmission rate negotiation; with said OLT over the back-up path,
- when a transmission rate is agreed upon between said ONU and said OLT during said transmission rate negotiation with regard to communication over said back-up path, executing (150) communication with said OLT using said agreed transmission rate over the back-up path.

2. A method (100) in an ONU according to claim 1, further comprising negotiating (140) one or more further parameters to be used for communication on the back-up fibre path between said ONU and said OLT.

3. A method (100) in an ONU according to any of claims 1-2, wherein upon detecting (110) a fault in said main link between said ONU and said OLT, the method further comprises, before performing (120) a transmission rate negotiation with said OLT over said back-up fibre path:
- performing (111) a first transmission rate negotiation with said OLT over the main path,
- if a transmission rate is agreed upon between said ONU and said OLT during said first transmission rate negotiation (111), executing (155) communication with said OLT using said agreed transmission rate over the main path, or
- if a transmission rate is not agreed upon between said ONU and said OLT during said first transmission rate negotiation (111), performing (120) a second transmission rate negotiation with said OLT over the back-up path, and
- when a transmission rate is agreed upon between said ONU and said OLT during said second transmission rate negotiation, executing (150) communication with said OLT using said agreed transmission rate over the backup path.

4. A method (100) in an ONU according to claim 3 , wherein said first transmission rate negotiation (111) with said OLT over the main path results in a transmission rate which is lower than the transmission rate used before said detection of said fault in said main fibre path between said ONU and said OLT, the method further comprising comparing (114) said negotiated transmission rate between said ONU and said OLT over the main path with said pre-negotiated transmission rate between said ONU and said OLT over the backup path, and if said negotiated transmission rate over said main path is lower than said pre-negotiated transmission rate over said back-up path, then execute (116) communication to said OLT over the backup path using said pre-negotiated transmission rate; or if said negotiated transmission rate over said main path is higher than said pre-negotiated transmission rate over said back-up path, then executing (155) communication to said OLT over the main path using said negotiated transmission rate.

5. A method (100) in an ONU according to any of claims 1-4, wherein the at least one OLT comprises two separate OLTs with which the ONU communicates over the fibre optic network, the two separate OLTs being a main OLT connected to the ONU via the main fibre path and a back-up OLT connected to the ONU via the back-up fibre path.

6. A method (200) in an Optical Line Terminal, OLT, in a fibre optic access network, the fibre optic access network comprising at least two fibre paths between the OLT and an Optical Network Unit, ONU, a main fibre path and a back-up fibre path, for enabling the ONU to communicate over the fibre optic access network, the method **characterised by**
- detecting (210) a fault in the main fibre path between said OLT and said ONU, during ongoing communication,
- performing (220) a transmission rate negotiation with said ONU over said back-up path upon detecting said fault in said main fibre path,
- when a transmission rate is agreed upon between said OLT and said ONU, during said transmission rate negotiation with regard to communication over said back-up fibre path, executing (231) communication with said ONU using said agreed transmission rate over said back-up fibre path.

7. A method (200) in an OLT according to claim 6, further comprises negotiating (230) one or more further parameters to be used for communication on the back-up fibre path between said OLT and said ONU.

8. A method (200) in an OLT according to any of claims 6-7, wherein upon detecting a fault in said main link between said ONU and said OLT, the method further comprises before performing (210) a first transmission rate negotiation with said OLT over the back-up path:
- performing (211) a first transmission rate negotiation with said ONU over the main fibre path,
- if a transmission rate is agreed upon between said ONU and said OLT during said first transmission rate negotiation, executing (232) communication with said ONU using said agreed transmission rate over the main path, or
- if a transmission rate is not agreed upon between said ONU and said OLT during said first transmission rate negotiation, performing (210) a second transmission rate negotiation with said ONU over the back-up path, and
when a transmission rate is agreed upon between said ONU and said OLT during said second transmission rate negotiation, executing (231) communication with said ONU using said agreed transmission rate over the backup path.

9. A method (200) in an OLT according to claim 8 , wherein said first transmission rate negotiation (211) with said ONU over the main path results in a transmission rate which is lower than the transmission rate used before said detection of said fault in said link between said ONU and said OLT, the method further comprising comparing (214) said negotiated transmission rate between said ONU and said OLT over the main path with said pre-negotiated transmission rate between said ONU and said OLT over the backup path, and if said negotiated transmission rate over said main path is lower than said pre-negotiated transmission rate over said back-up path, then executing (216) communication to said ONU over the backup path using said pre-negotiated transmission rate; or if said negotiated transmission rate over said main path is higher than said pre-negotiated transmission rate over said back-up path, then executing (232) communication to said ONU over the main path using said negotiated transmission rate.

10. A method (200) in an OLT according to any of claim 6-9, wherein said OLT is a main OLT connected to said ONU via the main fibre path and the back-up fibre path connects said ONU and a back-up OLT.

11. A method (200) in a main OLT according to claim 10, wherein in case said back-up fibre path is to be used, the method comprises sending an instruction to said back-up OLT, said instruction instructing said back-up OLT to initiate transmission rate negotiation with said ONU over said back-up fibre path.

12. A method (200) in an OLT according to any of claim 6-11, wherein said OLT is a back-up OLT connected to said ONU via the back-up fibre path and the main fibre path connects said ONU and a main OLT.

13. A method (200) in a back-up OLT according to claim 12, the method comprising:
- receiving (240) an indication that communication needs to be executed on a link between said back-up OLT and said ONU,
- performing (250) transmission rate negotiation with said ONU over said back-up fibre path,
- if said transmission rate negotiation does not results in an agreed transmission rate to be used for executing communication between said ONU and said back-up OLT over said back-up fibre path, then generating (257) a link failure message; or
- if a transmission rate is agreed upon between said ONU and said back-up OLT, then executing (256) communication with said back-up OLT using said agreed transmission rate over said back-up fibre path.

14. An Optical Network Unit, ONU (310), in a fibre optic access network, the fibre optic access network comprising at least one Optical Line Terminal, OLT, (320) and two fibre paths through the fibre optic network, a main path and a back-up path, connecting said ONU (310) with said OLT (320), the ONU being adapted to enable the ONU (310) to communicate over the fibre optic access network, the ONU (310) **characterised by** comprising a processing unit (311) adapted to:
- detect a fault in the main path between said ONU (310) and said OLT (320), during ongoing communication,
- in case a fault is detected, perform a transmission rate negotiation with said OLT (320) over the back-up path,
- when a transmission rate is agreed upon between said ONU (310) and said OLT (320) during said transmission rate negotiation with regard to communication over said back-up path, to execute communication with said OLT (320) using said agreed transmission rate over the back-up path.

15. An Optical Line Terminal, OLT, (320) in a fibre optic access network, the fibre optic access network comprising at least two fibre paths between the OLT and an Optical Network Unit, ONU, (310) a main fibre path and a back-up fibre path, the OLT (320) being adapted to enable the ONU to communicate over the fibre optic access network, the OLT **characterised by** comprising a processing unit (321) adapted to:
- detect a fault in the main fibre path between said OLT (320) and said ONU (310), during ongoing communication,
- perform a transmission rate negotiation with said ONU (310) over said back-up path upon detecting said fault in said main fibre path,
- when a transmission rate is agreed upon between said OLT (320) and said ONU (310), during said transmission rate negotiation with regard to communication over said back-up fibre path, the processing unit (321) is adapted to execute communication with said ONU (310) using said agreed transmission rate over said back-up fibre path.

## Patentansprüche

1. Verfahren (100) in einer optischen Netzwerkeinheit, ONU, in einem Glasfaserzugangsnetz, wobei das Glasfaserzugangsnetz wenigstens ein Optical Line Terminal, OLT, und zwei Faserpfade durch das Glasfasernetz, einen Hauptpfad und einen Backup-Pfad, die die ONU mit dem OLT verbinden, um der ONU eine Kommunikation über das Glasfaserzugangsnetz zu ermöglichen, umfasst, wobei das Verfahren Folgendes umfasst:
- Detektieren (110) eines Fehlers auf dem Hauptfaserpfad zwischen der ONU und dem OLT während einer laufenden Kommunikation,
**dadurch gekennzeichnet, dass**
- im Fall der Detektion eines Fehlers eine Übertragungsratenverhandlung mit dem OLT über den Backup-Pfad durchgeführt wird (120),
- und wenn zwischen der ONU und dem OLT während der Übertragungsratenverhandlung eine Übertragungsrate hinsichtlich der Kommunikation über den Backup-Pfad vereinbart wird, die Kommunikation mit dem OLT unter Verwendung der vereinbarten Übertragungsrate über den Backup-Pfad ausgeführt wird (150).

2. Verfahren (100) in einer ONU nach Anspruch 1, ferner umfassend das Verhandeln (140) eines oder mehrerer weiterer Parameter, die für die Kommunikation auf dem Backup-Faserpfad zwischen der ONU und dem OLT verwendet werden sollen.

3. Verfahren (100) in einer ONU nach einem der Ansprüche 1 bis 2, wobei das Verfahren bei einer Detektion (110) eines Fehlers auf der Hauptverbindung zwischen der ONU und dem OLT ferner vor dem Durchführen (120) einer Übertragungsratenverhandlung mit dem OLT über den Backup-Faserpfad Folgendes umfasst:
- Durchführen (111) einer ersten Übertragungsratenverhandlung mit dem OLT über den Hauptpfad,
- Ausführen (155) der Kommunikation mit dem OLT unter Verwendung der vereinbarten Übertragungsrate über den Hauptpfad, wenn zwischen der ONU und dem OLT während der ersten Übertragungsratenverhandlung (111) eine Übertragungsrate vereinbart wird, oder
- Durchführen (120) einer zweiten Übertragungsratenverhandlung mit dem OLT über den Backup-Pfad, wenn zwischen der ONU und dem OLT während der ersten Übertragungsratenverhandlung (111) keine Übertragungsrate vereinbart wird, und
- Ausführen (150) der Kommunikation mit dem OLT unter Verwendung der vereinbarten Übertragungsrate über den Backup-Pfad, wenn zwischen der ONU und dem OLT während der zweiten Übertragungsratenverhandlung eine Übertragungsrate vereinbart wird.

4. Verfahren (100) in einer ONU nach Anspruch 3, wobei die erste Übertragungsratenverhandlung (111) mit dem OLT über den Hauptpfad zu einer Übertragungsrate führt, die niedriger als die Übertragungsrate ist, die vor der Detektion des Fehlers auf dem Hauptfaserpfad zwischen der ONU und dem OLT verwendet wurde, wobei das Verfahren ferner das Vergleichen (144) der verhandelten Übertragungsrate zwischen der ONU und dem OLT über den Hauptpfad mit der vorab verhandelten Übertragungsrate zwischen der ONU und dem OLT über den Backup-Pfad, und dann das Ausführen (116) der Kommunikation mit dem OLT über den Backup-Pfad unter Verwendung der vorab verhandelten Übertragungsrate, wenn die verhandelte Übertragungsrate über den Hauptpfad niedriger als die vorab verhandelte Übertragungsrate über den Backup-Pfad ist, oder das Ausführen (155) der Kommunikation mit dem OLT über den Hauptpfad unter Verwendung der verhandelten Übertragungsrate, wenn die verhandelte Übertragungsrate über den Hauptpfad höher als die vorab verhandelte Übertragungsrate über den Backup-Pfad ist, umfasst.

5. Verfahren (100) in einer ONU nach einem der Ansprüche 1 bis 4, wobei das wenigstens eine OLT zwei gesonderte OLTs umfasst, mit denen die ONU über das Glasfasernetz kommuniziert, wobei die beiden gesonderten OLTs ein Haupt-OLT, das über den Hauptfaserpfad mit der ONU verbunden ist, und ein Backup-OLT, das über den Backup-Faserpfad mit der ONU verbunden ist, umfassen.

6. Verfahren (200) in einem Optical Line Terminal, OLT, in einem Glasfaserzugangsnetzwerk, wobei das Glasfaserzugangsnetz wenigstens zwei Faserpfade zwischen dem OLT und einer optischen Netzwerkeinheit, ONU, einen Hauptfaserpfad und einen Backup-Faserpfad, um der ONU eine Kommunikation über das Glasfaserzugangsnetz zu gestatten, umfasst, wobei das Verfahren **dadurch gekennzeichnet ist, dass**
- während einer laufenden Kommunikation ein Fehler auf dem Hauptfaserpfad zwischen dem OLT und der ONU detektiert wird (210),
- bei Detektion des Fehlers auf dem Hauptfaserpfad eine Übertragungsratenverhandlung mit der ONU über den Backup-Pfad durchgeführt wird (220),
- und wenn zwischen dem OLT und der ONU während der Übertragungsratenverhandlung eine Übertragungsrate in Bezug auf die Kommunikation über den Backup-Pfad vereinbart wird, die Kommunikation mit der ONU unter Verwendung der vereinbarten Übertragungsrate über den Backup-Faserpfad ausgeführt wird (231).

7. Verfahren (200) in einem OLT nach Anspruch 6, ferner umfassend das Verhandeln (230) eines oder mehrerer weiterer Parameter, die für die Kommunikation auf dem Backup-Faserpfad zwischen dem OLT und der ONU verwendet werden sollen.

8. Verfahren (200) in einem OLT nach einem der Ansprüche 6 bis 7, wobei das Verfahren bei einer Detektion eines Fehlers auf der Hauptverbindung zwischen der ONU und dem OLT ferner vor dem Durchführen (210) einer Übertragungsratenverhandlung mit dem OLT über den Backup-Faserpfad Folgendes umfasst:
- Durchführen (211) einer ersten Übertragungsratenverhandlung mit der ONU über den Hauptpfad,
- Ausführen (232) der Kommunikation mit der ONU unter Verwendung der vereinbarten Übertragungsrate über den Hauptpfad, wenn zwischen der ONU und dem OLT während der ersten Übertragungsratenverhandlung eine Übertragungsrate vereinbart wird, oder
- Durchführen (210) einer zweiten Übertragungsratenverhandlung mit der ONU über den Backup-Pfad, wenn zwischen der ONU und dem OLT während der ersten Übertragungsratenverhandlung keine Übertragungsrate vereinbart wird, und
- Ausführen (231) der Kommunikation mit der ONU unter Verwendung der vereinbarten Übertragungsrate über den Backup-Pfad, wenn zwischen der ONU und dem OLT während der zweiten Übertragungsratenverhandlung eine Übertragungsrate vereinbart wird.

9. Verfahren (200) in einem OLT nach Anspruch 8, wobei die erste Übertragungsratenverhandlung (211) mit der ONU über den Hauptpfad zu einer Übertragungsrate führt, die niedriger als die Übertragungsrate ist, die vor der Detektion des Fehlers auf der Verbindung zwischen der ONU und dem OLT verwendet wurde, wobei das Verfahren ferner das Vergleichen (214) der verhandelten Übertragungsrate zwischen der ONU und dem OLT über den Hauptpfad mit der vorab verhandelten Übertragungsrate zwischen der ONU und dem OLT über den Backup-Pfad, und dann das Ausführen (216) der Kommunikation mit der ONU über den Backup-Pfad unter Verwendung der vorab verhandelten Übertragungsrate, wenn die verhandelte Übertragungsrate über den Hauptpfad niedriger als die vorab verhandelte Übertragungsrate über den Backup-Pfad ist, oder das Ausführen (232) der Kommunikation mit der ONU über den Hauptpfad unter Verwendung der verhandelten Übertragungsrate, wenn die verhandelte Übertragungsrate über den Hauptpfad höher als die vorab verhandelte Übertragungsrate über den Backup-Pfad ist, umfasst.

10. Verfahren (200) in einem OLT nach einem der Ansprüche 6 bis 9, wobei das OLT ein Haupt-OLT ist, das über den Hauptfaserpfad mit der ONU verbunden ist, und der Backup-Faserpfad die ONU und ein Backup-OLT verbindet.

11. Verfahren (200) in einem Haupt-OLT nach Anspruch 10, wobei das Verfahren dann, wenn der Backup-Faserpfad verwendet werden soll, das Senden eines Befehls an das Backup-OLT umfasst, wobei der Befehl das Backup-OLT anweist, eine Übertragungsratenverhandlung mit der ONU über den Backup-Faserpfad zu beginnen.

12. Verfahren (200) in einem OLT nach einem der Ansprüche 6 bis 11, wobei das OLT ein Backup-OLT ist, das über den Backup-Faserpfad mit der ONU verbunden ist, und der Hauptfaserpfad die ONU und ein Haupt-OLT verbindet.

13. Verfahren (200) in einem Backup-OLT nach Anspruch 12, wobei das Verfahren Folgendes umfasst:
- Empfangen (240) einer Angabe, dass eine Kommunikation auf einer Verbindung zwischen dem Backup-OLT und der ONU ausgeführt werden muss,
- Durchführen (250) einer Übertragungsratenverhandlung mit der ONU über den Backup-Faserpfad,
- Erzeugen (257) einer Verbindungsfehlernachricht, wenn die Übertragungsratenverhandlung nicht zu einer vereinbarten Übertragungsrate, die zur Ausführung der Kommunikation zwischen der ONU und dem Backup-OLT über den Backup-Faserpfad verwendet werden soll, führt; oder
- Ausführen (256) der Kommunikation mit dem Backup-OLT unter Verwendung der vereinbarten Übertragungsrate über den Backup-Faserpfad, wenn zwischen der ONU und dem Backup-OLT eine Übertragungsrate vereinbart wird.

14. Optische Netzwerkeinheit, ONU, (310) in einem Glasfaserzugangsnetz, wobei das Glasfaserzugangsnetz wenigstens ein Optical Line Terminal, OLT, (320) und zwei Faserpfade durch das Glasfasernetz, einen Hauptpfad und einen Backup-Pfad, die die ONU (310) mit dem OLT (320) verbinden, umfasst, wobei die ONU dazu ausgelegt ist, der ONU (310) eine Kommunikation über das Glasfaserzugangsnetz zu gestatten, wobei die ONU (310) **dadurch gekennzeichnet ist, dass** sie eine Verarbeitungseinheit (311) umfasst, die dazu ausgelegt ist,
- während einer laufenden Kommunikation einen Fehler auf dem Hauptpfad zwischen der ONU (310) und dem OLT (320) zu detektieren;
- im Fall der Detektion eines Fehlers eine Übertragungsratenverhandlung mit dem OLT (320) über den Backup-Pfad durchzuführen;
- und wenn zwischen der ONU (310) und dem OLT (320) während der Übertragungsratenverhandlung eine Übertragungsrate in Bezug auf die Kommunikation über den Backup-Pfad vereinbart wird, die Kommunikation mit dem OLT (320) unter Verwendung der vereinbarten Übertragungsrate über den Backup-Pfad auszuführen..

15. Optical Line Terminal, OLT, (320) in einem Glasfaserzugangsnetz, wobei das Glasfaserzugangsnetz wenigstens zwei Faserpfade zwischen dem OLT und einer optischen Netzwerkeinheit, ONU, (310), einen Hauptfaserpfad und einen Backup-Faserpfad, umfasst, wobei das OLT (320) dazu ausgelegt ist, der ONU eine Kommunikation über das Glasfaserzugangsnetz zu ermöglichen, wobei das OLT **dadurch gekennzeichnet ist, dass** es eine Verarbeitungseinheit (321) umfasst, die dazu ausgelegt ist,
- während einer laufenden Kommunikation einen Fehler auf dem Hauptfaserpfad zwischen dem OLT (320) und der ONU (310) zu detektieren;
- bei Detektion des Fehlers auf dem Hauptfaserpfad eine Übertragungsratenverhandlung mit der ONU (310) über den Backup-Pfad durchzuführen,
- und die Verarbeitungseinheit (321) bei Vereinbarung einer Übertragungsrate zwischen dem OLT (320) und der ONU (310) während der Übertragungsratenverhandlung hinsichtlich der Kommunikation über den Backup-Faserpfad dazu ausgelegt ist, die Kommunikation mit der ONU (310) unter Verwendung der vereinbarten Übertragungsrate über den Backup-Faserpfad auszuführen.

## Revendications

1. Procédé (100) dans une unité de réseau optique ONU dans un réseau d'accès à fibre optique, le réseau d'accès à fibre optique comprenant au moins un terminal de ligne optique OLT et deux trajets de fibre à travers le réseau de fibre optique, un trajet principal et un trajet d'appoint, connectant ladite ONU audit OLT pour permettre l'ONU de communiquer via le réseau d'accès à fibre optique, le procédé comprenant :
- la détection (110) d'un défaut dans le trajet de fibre principal entre ladite ONU et ledit OLT au cours d'une communication en cours,
**caractérisé en ce que** :
- dans le cas où un défaut est détecté, on effectue (120) une négociation du taux de transmission avec ledit OLT via le trajet d'appoint,
- lorsqu'un taux de transmission est agréé entre ladite ONU et ledit OLT au cours de ladite négociation du taux de transmission concernant la communication via ledit trajet d'appoint, on exécute (150) d'une communication avec ledit OLT en utilisant ledit taux de transmission agréé via le trajet d'appoint.

2. Procédé (100) dans une ONU selon la revendication 1, comprenant en outre la négociation (140) d'un ou plusieurs autres paramètres à utiliser pour la communication sur le trajet de fibre d'appoint entre ladite ONU et ledit OLT.

3. Procédé (100) dans une ONU selon l'une quelconque des revendications 1 et 2, dans lequel, lors de la détection (110) d'une faute dans ladite liaison principale entre ladite ONU et ledit OLT, le procédé comprend en outre, avant d'effectuer (120) une négociation du taux de transmission avec ledit OLT via ledit trajet de fibre d'appoint :
- la réalisation (111) d'une première négociation du taux de transmission avec ledit OLT via le trajet principal,
- si un taux de transmission est agréé entre ladite ONU et ledit OLT au cours de ladite première négociation du taux de transmission (111), l'exécution (155) d'une communication avec ledit OLT en utilisant ledit taux de transmission agréé via le trajet principal ou
- si un taux de transmission n'est pas agréé entre ladite ONU et ledit OLT au cours de ladite première négociation du taux de transmission (111), la réalisation (120) d'une seconde négociation du taux de transmission avec ledit OLT via le trajet d'appoint et
- lorsqu'un taux de transmission est agréé entre ladite ONU et ledit OLT au cours de ladite seconde négociation du taux de transmission, l'exécution (150) d'une communication avec ledit OLT en utilisant ledit taux de transmission agréé via le trajet d'appoint.

4. Procédé (100) dans une ONU selon la revendication 3, dans lequel ladite première négociation du taux de transmission (111) avec ledit OLT via le trajet principal entraîne un taux de transmission qui est inférieur au taux de transmission utilisé avant ladite détection de ladite faute dans ledit trajet de fibre principal entre ladite ONU et ledit OLT, le procédé comprenant en outre la comparaison (114) dudit taux de transmission négocié entre ladite ONU et ledit OLT via le trajet principal avec ledit taux de transmission prénégocié entre ladite ONU et ledit OLT via le trajet d'appoint et, si ledit taux de transmission négocié via ledit trajet principal est inférieur audit taux de transmission prénégocié via ledit trajet d'appoint, l'exécution (116) ensuite d'une communication avec ledit OLT via le trajet d'appoint en utilisant ledit taux de transmission prénégocié ; ou, si ledit taux de transmission négocié via ledit trajet principal est plus élevé que ledit taux de transmission prénégocié via ledit trajet d'appoint, l'exécution (155) ensuite d'une communication avec ledit OLT via le trajet principal en utilisant ledit taux de transmission négocié.

5. Procédé (100) dans une ONU selon l'une quelconque des revendications 1 à 4, dans lequel le au moins un OLT comprend deux OLT séparés avec lesquels l'ONU communique via le réseau de fibre optique, les deux OLT séparés étant un OLT principal connecté à l'ONU via le trajet de fibre principal et un OLT d'appoint connecté à l'ONU via le trajet de fibre d'appoint.

6. Procédé (200) dans un terminal de ligne optique OLT dans un réseau d'accès à fibre optique, le réseau d'accès à fibre optique comprenant au moins deux trajets de fibre entre l'OLT et une unité de réseau optique ONU, un trajet de fibre principal et un trajet de fibre d'appoint, pour permettre à l'ONU de communiquer via le réseau de fibre optique, le procédé étant **caractérisé par** :
- la détection (210) d'un défaut dans le trajet de fibre principal entre ledit OLT et ladite ONU au cours d'une communication en cours,
- la réalisation (220) d'une négociation du taux de transmission avec ladite ONU via ledit trajet d'appoint lors de la détection de ladite faute dans ledit trajet de fibre principal,
- lorsqu'un taux de transmission est agréé entre ledit OLT et ladite ONU, au cours de ladite négociation du taux de transmission par rapport à la communication via ledit trajet de fibre d'appoint, l'exécution (231) d'une communication avec ladite ONU en utilisant ledit taux de transmission agréé via ledit trajet de fibre d'appoint.

7. Procédé (200) dans un OLT selon la revendication 6, qui comprend en outre la négociation (230) d'un ou plusieurs autres paramètres à utiliser pour une communication sur le trajet de fibre d'appoint entre ledit OLT et ladite ONU.

8. Procédé (200) dans un OLT selon l'une quelconque des revendications 6 et 7, dans lequel, lors de la détection d'un défaut dans ladite liaison principale entre ladite ONU et ledit OLT, le procédé comprend en outre, avant de réaliser (210) une première négociation du taux de transmission avec ledit OLT via le trajet d'appoint :
- la réalisation (211) d'une première négociation du taux de transmission avec ladite ONU via le trajet de fibre principal,
- si un taux de transmission est agréé entre ladite ONU et ledit OLT au cours de ladite première négociation du taux de transmission, l'exécution (232) d'une communication avec ladite ONU en utilisant ledit taux de transmission agréé via le trajet principal ou
- si un taux de transmission n'est pas agréé entre ladite ONU et ledit OLT au cours de ladite première négociation du taux de transmission, la réalisation (210) d'une seconde négociation du taux de transmission avec ladite ONU via le trajet d'appoint et
- lorsqu'un taux de transmission est agréé entre ladite ONU et ledit OLT au cours de ladite seconde négociation du taux de transmission, l'exécution (231) d'une communication avec ladite ONU en utilisant ledit taux de transmission agréé via le trajet d'appoint.

9. Procédé (200) dans un OLT selon la revendication 8, dans lequel ladite première négociation du taux de transmission (211) avec ladite ONU via le trajet principal entraîne un taux de transmission qui est inférieur au taux de transmission utilisé avant ladite détection de ladite faute dans ladite liaison entre ladite ONU et ledit OLT, le procédé comprenant en outre la comparaison (214) dudit taux de transmission négocié entre ladite ONU et ledit OLT via le trajet principal avec ledit taux de transmission prénégocié entre ladite ONU et ledit OLT via le trajet d'appoint et, si ledit taux de transmission négocié via ledit trajet principal est inférieur audit taux de transmission prénégocié via ledit trajet d'appoint, l'exécution (216) ensuite d'une communication avec ladite ONU via le trajet d'appoint en utilisant ledit taux de transmission prénégocié ; ou, si ledit taux de transmission négocié via ledit trajet principal est supérieur audit taux de transmission prénégocié via ledit trajet d'appoint, l'exécution (232) ensuite d'une communication avec ladite ONU via le trajet principal en utilisant ledit taux de transmission négocié.

10. Procédé (200) dans un OLT selon l'une quelconque des revendications 6 à 9, dans lequel ledit OLT est un OLT principal connecté à ladite ONU via le trajet de fibre principal et le trajet de fibre d'appoint connecte ladite ONU et un OLT d'appoint.

11. Procédé (200) dans un OLT principal selon la revendication 10, dans lequel, dans le cas où ledit trajet de fibre d'appoint doit être utilisé, le procédé comprend l'envoi d'une instruction audit OLT d'appoint, ladite instruction instruisant ledit OLT d'appoint d'initier une négociation du taux de transmission avec ladite ONU via ledit trajet de fibre d'appoint.

12. Procédé (200) dans un OLT selon l'une quelconque des revendications 6 à 11, dans lequel ledit OLT est un OLT d'appoint connecté à ladite ONU via le trajet de fibre d'appoint et le trajet de fibre principal connecte ladite ONU et un OLT principal.

13. Procédé (200) dans un OLT d'appoint selon la revendication 12, le procédé comprenant :
- la réception (240) d'une indication que la communication doit être exécutée sur une liaison entre ledit OLT d'appoint et ladite ONU,
- la réalisation (250) d'une négociation du taux de transmission avec ladite ONU via ledit trajet de fibre d'appoint,
- si ladite négociation du taux de transmission n'entraîne pas un taux de transmission agréé à utiliser pour l'exécution de la communication entre ladite ONU et ledit OLT d'appoint via ledit trajet de fibre d'appoint, la génération (257) ensuite d'un message de défaillance de liaison ; ou
- si un taux de transmission est agréé entre ladite ONU et ledit OLT d'appoint, l'exécution (256) ensuite d'une communication avec ledit OLT d'appoint en utilisant ledit taux de transmission agréé via ledit trajet de fibre d'appoint.

14. Unité de réseau optique ONU (310) dans un réseau d'accès à fibre optique, le réseau d'accès à fibre optique comprenant au moins un terminal de ligne optique OLT (320) et deux trajet de fibre à travers le réseau de fibre optique, un trajet principal et un trajet d'appoint, connectant ladite ONU (310) audit OLT (320), l'ONU étant à même de permettre à l'ONU (310) de communiquer via le réseau d'accès à fibre optique, l'ONU (310) étant **caractérisée en ce qu'**elle comprend une unité de traitement (311) qui est à même de :
- détecter une faute dans le trajet principal entre ladite ONU (310) et ledit OLT (320) au cours d'un communication en cours,
- dans le cas où une faute est détectée, réaliser une négociation du taux de transmission avec ledit OLT (320) via le trajet d'appoint,
- lorsqu'un taux de transmission est agréé entre ladite ONU (310) et ledit OLT (320) au cours de ladite négociation du taux de transmission par rapport à la communication via ledit trajet d'appoint, exécuter une communication avec ledit OLT (320) en utilisant ledit taux de transmission agréé via le trajet d'appoint.

15. Terminal de ligne optique OLT (320) dans un réseau d'accès à fibre optique, le réseau d'accès à fibre optique comprenant au moins deux trajets de fibre entre l'OLT et une unité de réseau optique ONU (310), un trajet de fibre principal et un trajet de fibre d'appoint, l'OLT (320) étant à même de permettre à l'ONU de communiquer via le réseau d'accès à fibre optique, l'OLT étant **caractérisé en ce qu'**il comprend une unité de traitement (321) qui est à même de :
- détecter un défaut dans le trajet de fibre principal entre ledit OLT (320) et ladite ONU (310) au cours d'une communication en cours,
- réaliser une négociation du taux de transmission avec ladite ONU (310) via ledit trajet d'appoint lors de la détection de ladite faute dans ledit trajet de fibre principal,
- lorsqu'un taux de transmission est agréé entre ledit OLT (320) et ladite ONU (310), au cours de ladite négociation du taux de transmission par rapport à la communication via ledit trajet de fibre d'appoint, l'unité de traitement (321) est à même d'exécuter une communication avec ladite ONU (310) en utilisant ledit taux de transmission agréé via ledit trajet de fibre d'appoint.
